(19) Europäisches Patentamt
European Patent Office
Office européen des brevets

(11) **EP 1 780 296 A1**

(12) **EUROPEAN PATENT APPLICATION**

(43) Date of publication:
**02.05.2007 Bulletin 2007/18**

(51) Int Cl.:
*C22C 38/02* (2006.01)   *C22C 38/04* (2006.01)
*C22C 38/60* (2006.01)   *C22C 38/24* (2006.01)
*F16C 7/00* (2006.01)

(21) Application number: **06022072.0**

(22) Date of filing: **20.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.10.2005 JP 2005311365**

(71) Applicant: **NISSAN MOTOR CO., LTD.**
**Yokohama-shi,**
**Kanagawa 221-0023 (JP)**

(72) Inventors:
• **Aihara, Isseki**
**Atsugi-shi**
**Kanagawa 243-0192 (JP)**
• **Yamada, Yuuichi**
**Atsugi-shi**
**Kanagawa 243-0192 (JP)**

• **Miyazawa, Tomonori**
**Atsugi-shi**
**Kanagawa 243-0192 (JP)**
• **Usuki, Hideki**
**Atsugi-shi**
**Kanagawa 243-0192 (JP)**
• **Okada, Yoshio**
**Kanagawa 243-0192 (JP)**
• **Kato, Shinichiro**
**c/o Daido Steel Co., Ltd.**
**Nagoya-shi, Aichi 457-8545 (JP)**
• **Hayaishi, Masakazu**
**c/o Daido Steel Co.Ltd.**
**Nagoya-shi, Aichi 457-8545 (JP)**

(74) Representative: **Schaeberle, Steffen**
**Hoefer & Partner,**
**Patentanwälte,**
**Gabriel-Max-Strasse 29**
**81545 München (DE)**

(54) **Non-heat treated steel for connecting rod and connecting rod formed of same**

(57) A non-heat treated steel for hot forging and for a connecting rod, containing, in mass percent: 0.3 to 0.8% of C; 0.1 to 2.0% of Si; 0.5 to 1.5% of Mn; 0.01 to 0.15% of P; 1.0% or less of Cr; 0.4% or less of V; 0.05% or less of Al; 0.005 to 0.03% of N; and the balance Fe and inevitable impurities. The non-heat treated steel has a value E of not larger than 150, the value E being calculated from the following equation:

$$E = 2804 - 1549 \times Ceq - 8862 \times P - 23.4 \times H$$

where H is a value of a Rockwell hardness of the connecting rod made of the non-heat treated steel; P is a phosphorus content (%) in the connecting rod; and Ceq is a value of a carbon equivalent.

**FIG.1**

EP 1 780 296 A1

**Description**

BACKGROUND OF THE INVENTION

This invention relates to improvements in a non-heat treated steel for use in a connecting rod, and more particularly to a connecting rod formed of the non-heat treated steel. The steel is shaped into a machine part by hot forging and then fractured and separated into two or more components by an impactive force, and thereafter reassembled with fastening part such as bolts, so as to be used as the connecting rod.

Conventionally, a connecting rod used for connecting a piston and a crankshaft in an internal combustion engine for an automotive vehicle is produced by the steps of : integrally forming a steel by forging to have the shape of an end product; making finishing machining on the steel; and separating the steel into a cap portion and a small end and rod portion by cutting machining. However, the number of machining processes and the existence of a portion to be lost by cutting unavoidably increase the production cost of the conventional connecting rod.

In view of this, a method for producing a connecting rod is disclosed in Japanese Patent Provisional Publication No. 2002-275578 as a fracture separation method in which the connecting rod is separated by an impactive force and not by the finishing machining. The fracture separation method results in reductions in the number of machining processes and in the portion to be lost by cutting, so as to be expected to have an advantage of a reduction of the production cost.

SUMMARY OF THE INVENTION

However, drawbacks have been encountered in the above conventional connecting rod. In the above fracture separation method, a fracture separation ability is imparted to a steel material by highly hardening the steel material with a large content of C and V, and this causes drawbacks that an offset yield strength is not increased as compared with hardness and that a cutting property is degraded.

It is therefore an object of the present invention to provide an improved non-heat treated steel for a connecting rod and a connecting rod formed thereof, which can effectively overcome drawbacks encountered in the conventional non-heat treated steel for a connecting rod and the conventional connecting rod formed thereof.

Another object of the present invention is to provide an improved non-heat treated steel for a connecting rod which steel ensures the cutting property and offset yield strength and is suitable for fracture separation, and an improved connecting rod formed thereof.

In order to accomplish the objects, the present inventors made eager research and development on a main component and the kind and amount of additive alloy elements of the steel material for a connecting rod. As a result of this, it was found possible that an ovalness degree was predicted by drawing a relationship among the ovalness degree and the composition and hardness of the steel material, which completed the present invention. The above-mentioned ovalness degree means deviation of the inside bore (in cross-section) defined by a big end of the connecting rod from a perfect circle, and corresponds to a difference (mm) between a longitudinal diameter and a diameter perpendicular to the longitudinal diameter of the inside bore.

An aspect of the present invention resides in a non-heat treated steel for hot forging and for a connecting rod, comprising, in mass percent: 0.3 to 0.8% of C; 0.1 to 2.0% of Si; 0.5 to 1-5% of Mn; 0.01 to 0.15% of P; 1.0% or less of Cr; 0.4% or less of V; 0.05% or less of Al; 0.005 to 0.03% of N; and the balance Fe and inevitable impurities. The non-heat treated steel has a value E of not larger than 150, the value E being calculated from the following equation:

$$E = 2804 - 1549 \times Ceq - 8862 \times P - 23.4 \times H$$

where H is a value of a Rockwell hardness (C-scale) of the connecting rod made of the non-heat treated steel; P is a phosphorus content (%) in the connecting rod; and Ceq is a value of a carbon equivalent, the value Ceq being calculated from the following equation:

$$Ceq = C(\%) + 0.166 Si(\%) + 0.22 Mn(\%) + 0.25 Cr(\%) + 1.8 V(\%).$$

Another aspect of the present invention resides in a connecting rod comprising, in mass percent: 0.3 to 0.8% of C; 0.1 to 2.0% of Si; 0.5 to 1.5% of Mn; 0.01 to 0.15% of P; 1.0% or less of Cr; 0.4% or less of V; 0.05% or less of Al; 0.005 to 0.03% of N; and the balance Fe and inevitable impurities. The connecting rod has a value E of not larger than 150, the value E being calculated from the following equation:

$$E = 2804 - 1549 \times Ceq - 8862 \times P - 23.4 \times H$$

where H is a value of a Rockwell hardness (C-scale) of the connecting rod; P is a phosphorus content (%) in the connecting rod; and Ceq is a value of a carbon equivalent, the value Ceq being calculated from the following equation:

$$Ceq = C(\%) + 0.166Si(\%) + 0.22Mn(\%) + 0.25Cr(\%) + 1.8V(\%).$$

BRIEF DESCRIPTION OF THE DRAWING

Fig. 1 is an illustration showing the shape of a connecting rod material formed by forging;
Fig. 2 is a graph of experimental data showing the correlation between a value E and a value of a measured ovalness degree, the value E being a value with which prediction can be made whether the connecting rod has a value of a measured ovalness degree below a standard value; and
Fig. 3 is a graph of experimental data showing the correlation between a Rockwell hardness (C scale) and the value of the measured ovalness degree.

DETAILED DESCRIPTION OF THE INVENTION

According to the present invention, a non-heat treated steel for hot forging and for a connecting rod comprises, in mass percent: 0.3 to 0.8% of C; 0.1 to 2.0% of Si; 0.5 to 1.5% of Mn; 0.01 to 0.15% of P; 1.0% or less of Cr; 0.4% or less of V; 0.05% or less of Al; 0.005 to 0.03% of N; and the balance Fe and inevitable impurities. The non-heat treated steel has a value E of not larger than 150, the value E being calculated from the following equation:

$$E = 2804 - 1549 \times Ceq - 8862 \times P - 23.4 \times H$$

where H is a value of a Rockwell hardness (C-scale) of the connecting rod made of the non-heat treated steel; P is a phosphorus content (%) in the connecting rod; and Ceq is a value of a carbon equivalent, the value Ceq being calculated from the following equation:

$$Ceq = C(\%) + 0.166Si(\%) + 0.22Mn(\%) + 0.25Cr(\%) + 1.8V(\%).$$

In addition to the reasons for limitation of various alloy components of a connecting rod according to the present invention, an equation obtained by a multiple regression, analysis made on an ovalness degree (that the connecting rod has) will be hereinafter discussed in detail. The above-mentioned ovalness degree means deviation of the inside bore (in cross-section) defined by a big end of the connecting rod from a perfect circle, and corresponds to a difference (mm) between a longitudinal diameter and a diameter perpendicular to the longitudinal diameter of the inside bore. Further, an embodiment of the connecting rod according to the present invention will be also discussed. In this specification, all percentages (%) are by mass unless otherwise specified.

$$C: 0.3 \text{ to } 0.8\%$$

Carbon is an element which is inexpensive and effective for ensuring hardness and strength of steel. Steel having a C content of less than 0.3% cannot achieve a desired strength. Meanwhile, a C content of over 0.8% causes an excessive hardness increase to degrade a cutting property of steel, though the desired strength can be achieved. It is therefore necessary that the amount or content of carbon is set within the above-mentioned range.

## Si: 0.1 to 2.0%

Silicon is an element which can be dissolved in a ferritic phase so as to exhibit the effect of strengthening steel. In order to obtain a sufficient fracture separation ability, the Si addition of not lower than 0.1% is required. However, the Si addition of a large amount increases a deformation resistance in hot condition, i.e., degrades a forgeability, so that the upper limit to the Si addition amount is set to 2.0%.

## Mn: 0.5 to 1.5%

Manganese has the effect of improving a hot workability. In order to obtain a sufficient hot workability, the Mn addition of not lower than 0.5% is required. Additionally, manganese has the effect of improving a hardenability so as to be added for the purpose of hardening the connecting rod. However, the Mn addition of an excessive amount causes generation of a bainitic phase after forging, i.e., causes an excessive hardness increase to degrade the cutting property, so that the upper limit to the Mn addition amount is set to 1.5%.

## P: 0.01 to 0.15%

Phosphorus strengthens the ferritic phase thereby to exhibit the effect of suppressing deformation at the time of fracture separation, so that the addition is not lower than 0.01%. However, the P addition of a large amount is to saturate the effect. Further, as the amount of phosphorus is increased, a surface formed at fracture separation is likely to be smoothed to degrade an engagement property required at reassembling after the separation, so that the upper limit to the P addition amount is set to 0.15%.

## Cr: 1.0% or less

Chromium has the effect of enhancing strength after forging and of improving the hardenability, so as to be added for the purpose of hardening the connecting rod. However, the Cr addition of a large amount causes generation of the bainitic phase after forging, i.e., causes an excessive hardness increase to degrade the cutting property, so that the upper limit to the Cr addition amount is set to 1.0%.

## V: 0.4% or less

Vanadium reacts with nitrogen and carbon to form carbonitrides thereby increasing strength after forging, so as to exhibit the effect of improving an offset yield strength. Additionally, carbonitrides of vanadium, which are deposits, strengthen the ferritic phase to suppress deformation at the time of fracture, thereby exhibiting the effect of improving a fracture separation ability. The effect is, however, to be saturated as the V addition amount is increased. Namely, the V addition of a large amount results in degradation of the cutting property and in increase in cost, so that the upper limit to the V addition amount is set to 0.4%.

## Al: 0.05% or less

Aluminum has the effect of forming fine nitride particles to prevent coarsening of crystal grains, so as to be positively added sometimes. However, aluminum heightens a ductility to increase deformation at the time of fracture separation, which may result in an abuse when the purpose of the addition is to ensure the fracture separation ability, so that the upper limit to the Al addition amount is set to 0.05%.

## N: 0.005 to 0.03%

Nitrogen is an inevitable impurity and has the effect of forming nitrides to prevent coarsening of crystal grains during forging process. However, the N addition of a large amount results in formation of defect at the time of forging. The amount of N addition is therefore set within the range of from 0.005% which is the lower limit required for processes, to 0.03% which is the upper limit not to form the defect,

S: 0.03 to 0.15%
Pb: 0.3% or less
Ca: 0.01% or less

These elements (S, Pb and Ca) are for improving the cutting property. They can be added singly or in combination as required.

To be more specific, sulfur is an element having the effect of forming sulfides with manganese and improving the cutting property. In order to obtain the effect, the S addition of not less than 0.03% is needed. Meanwhile, the S addition of a large amount degrades the hot workability so that the upper limit is set to 0.15%. Additionally, lead is an element to be added for improving an easy cutting property, but the Pb addition of a large amount makes it difficult that lead is uniformly dispersed in steel. The aggregated lead results in defect, so that the upper limit to the Pb addition amount is set to 0.3%. Further, calcium is an element which substitutes for a part of manganese in MnS to form MnS in which calcium is dissolved, and has the effect of improving the cutting property in such a manner that the MnS in which calcium is dissolved adheres to a tool at the time of cutting, so as to be added in order to obtain the effect. However, the addition of a large amount of calcium forms CaS having such a high melting point as to hinder casting, so that the upper limit is set to 0.01%.

Rockwell hardness (HRC): 24 to 35

In this specification, hardness values are represented as Rockwell hardness (C scale) or HRC.

The connecting rod according to the present invention is formed of the non-heat treated steel for the connecting rod which steel is of the above-mentioned composition. It is preferable that the connecting rod has a Rockwell hardness (HRC) within a range of from 24 to 35.

When the connecting rod has a Rockwell hardness of lower than 24 on the C scale, a value of the ovalness degree (or deviation of the inside bore (in cross-section) defined by the big end of the connecting rod from a perfect circle) increases and exceeds a standard value (1mm) after fracture separation so as to make it difficult that the connecting rod ensures the fracture separation ability. Meanwhile, when the connecting rod has a Rockwell hardness exceeding 35, the cutting property is degraded and the forming cost is likely to increase. It is therefore preferable that the connecting rod has a Rockwell hardness within the above range.

The ovalness degree which develops by fracture means deviation of the inside bore (in cross-section) defined by the big end from a perfect circle. The ovalness degree exerts a large influence on a reassembling ability required after fracture separation. When the connecting rod has a large ovalness degree, a portion to be removed by machining after reassembling is also large, thereby reducing a yield. Therefore, the connecting rod is required to have the ovalness degree not exceeding the standard value.

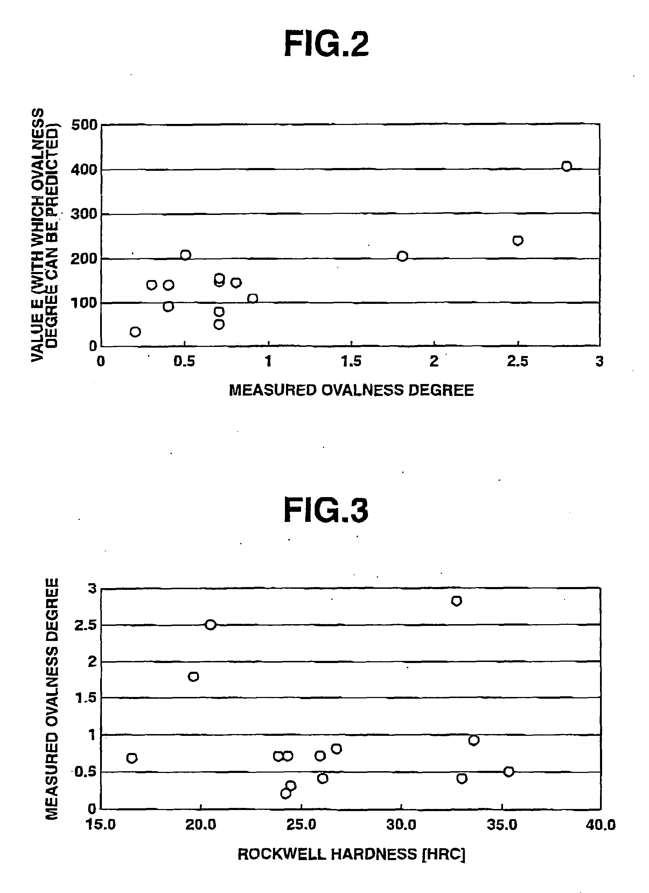

As apparent from Fig. 3, it is preferable that the connecting rod has a Rockwell hardness of not lower than 24 in order that the rod can obtain the ovalness degree not exceeding the standard value. The connecting rod can ensure the fracture separation ability with the Rockwell hardness of not lower than 24. Meanwhile, the connecting rod having a Rockwell hardness of higher than 35 is degraded in cutting property, so that the upper limit to the Rockwell hardness is preferably set to 35.

An equation representing a relationship in a connecting rod between the chemical composition and the structure which relationship exerts a large influence on the ovalness degree (mm), is obtained by making a multiple regression analysis using a carbon equivalent (Ceq), the amount of phosphorus, hardness, grain size of crystals in pearlitic and ferritic phases, and an area percentage of the ferritic phase as parameters. The equation is expressed as follows:

$$E = 2804 - 1549 \times Ceq - 8862 \times P - 23.4 \times H \leq 150 \quad \cdots Eq.(E)$$

where H is a value of a Rockwell hardness (HRC) of the connecting rod; P is a phosphorus content (%) in the connecting rod; and Ceq is a value of the carbon equivalent, the value Ceq being calculated from the following equation:

$$Ceq = C(\%) + 0.166 Si(\%) + 0.22 Mn(\%) + 0.25 Cr(\%) + 1.8 V(\%).$$

More specifically, prediction can be made based on a result calculated from Eq.(E) whether or not the connecting rod has the ovalness degree not exceeding the standard value. When the composition of the steel is so adjusted that the connecting rod has a value E (or the result calculated from Eq.(E)) of not larger than 150, the connecting rod can ensure the reassembling ability required after fracture separation, as discussed above.

EXAMPLES

The present invention will be more readily understood with reference to the following Examples and Comparative Examples; however, these Examples are intended to illustrate the invention and are not to be construed to limit the scope of the invention.

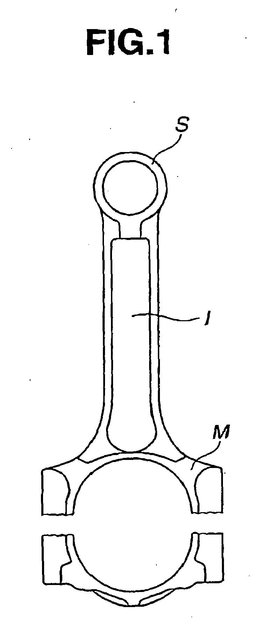

Each of steels of 11 types (A to K) having chemical compositions shown in Table 1 was molten and then ingot into a rod-like ingot having a diameter of 40mm. The rod-like ingot was thereafter hot forged to have a shape of a connecting rod (shown in Fig. 1 and including a small end S, a section I which is I-shaped in cross section, and a big end M), thereby producing a test specimen.

Further, conditions of working and heating at the time of hot forging corresponded to those for an actual product of the connecting rod. Additionally, in order to confirm an influence on a hardness variation due to a variation of cooling condition (shown in "Remarks" in Table 1), the quantity of cooling air supplied after forging was controlled by regulating the output of a fan.

**TABLE 1**

| Section | Type of steel | Chemical composition (%) | | | | | | | | | Rockwell hardness (HRC) of big end | Value E | Measured ovalness degree (mm) | Remarks |
|---|---|---|---|---|---|---|---|---|---|---|---|---|---|---|
| | | C | Si | Mn | P | S | Cr | V | Ca | Ceq | | | | |
| Example 1 | A | 0.40 | 0.55 | 0.75 | 0.092 | 0.061 | 0.22 | 0.08 | 0.0015 | 0.857 | 24.3 | 92.6 | 0.7 | Carrying out conventional cooling condition |
| 2 | A | 0.40 | 0.55 | 0.75 | 0.092 | 0.061 | 0.22 | 0.08 | 0.0015 | 0.857 | 26.1 | 50.5 | 0.4 | Cooled at rate lower than that in conventional cooling condition |
| 3 | B | 0.39 | 0.59 | 0.80 | 0.090 | 0.057 | 0.10 | 0.08 | 0.0018 | 0.835 | 24.5 | 140.2 | 0.3 | Carrying out conventional cooling condition |
| 4 | C | 0.39 | 0.58 | 0.74 | 0.099 | 0.061 | 0.25 | 0.08 | 0.0017 | 0.856 | 24.2 | 34.4 | 0.2 | Carrying out conventional cooling condition |
| 5 | D | 0.43 | 0.59 | 0.80 | 0.080 | 0.057 | 0.10 | 0.10 | 0.0020 | 0.909 | 25.9 | 80.3 | 0.7 | Carrying out conventional cooling condition |
| 6 | E | 0.41 | 0.61 | 0.79 | 0.075 | 0.048 | 0.15 | 0.09 | 0.0013 | 0.885 | 26.7 | 143.7 | 0.8 | Carrying out conventional cooling condition |
| 7 | F | 0.75 | 0.15 | 0.35 | 0.030 | 0.051 | 0.12 | 0.10 | 0.0015 | 1.062 | 33.5 | 108.5 | 0.9 | Excellent in fracture separation ability because of its high hardness with large content of C |
| 8 | J | 0.39 | 0.55 | 0.73 | 0.090 | 0.010 | 0.20 | 0.08 | - | 0.836 | 23.8 | 147.7 | 0.7 | Carrying out conventional cooling condition |
| 9 | K | 0.73 | 0.18 | 0.36 | 0.030 | 0.010 | 0.13 | 0.10 | - | 1.052 | 32.8 | 136.5 | 0.4 | Excellent in fracture separation ability because of its high hardness with large content of C |
| Comparative example I | A | 0.40 | 0.55 | 0.75 | 0.092 | 0.061 | 0.22 | 0.08 | 0.0015 | 0.857 | 19.6 | 201.2 | 1.8 | Cooled at rate lower than that in conventional cooling condition so as to be low in hardness |
| II | B | 0.39 | 0.59 | 0.80 | 0.080 | 0.057 | 0.10 | 0.08 | 0.0018 | 0.835 | 20.5 | 235.9 | 2.5 | Cooled at rate lower than that in conventional cooling condition so as to be low in hardness |
| III | G | 0.32 | 0.48 | 0.51 | 0.152 | 0.050 | 0.10 | 0.03 | 0.0017 | 0.591 | 16.6 | 153.8 | 0.7 | Cracks occurred in steel making process |
| IV | H | 0.82 | 0.20 | 0.44 | 0.020 | 0.042 | 0.10 | 0.03 | 0.0013 | 1.029 | 35.2 | 208.3 | 0.5 | Excellent in fracture separation ability but degraded in cutting property |
| V | I | 0.51 | 0.60 | 0.75 | 0.008 | 0.062 | 0.22 | 0.10 | 0.0016 | 1.010 | 32.7 | 403.2 | 2.8 | Degraded in fracture separation ability because of low content of P |

The thus obtained forging (or connecting rod material) was subjected to a Rockwell hardness measurement at the big end M thereof. Additionally, a notch of 0.5mm in depth was formed at the big end M by a laser beam machining. Thereafter, a cuneate jig for splitting was fitted into a cylindrical bore defined by the big end, and then an impactive force was applied to the jig so that the big end M was split with the jig. The split big end M was reassembled and then an ovalness degree thereof was measured.

Additionally, sheet samples were produced respectively, by using the steels of the 11 types (A to K) under hot forging. Each sheet sample has such a metallographic structure and such a hardness as to correspond to the actual product. Drilling was made to the sheet sample. Then, the amount of wear of a drill was measured to evaluate the efficiency of the drilling, i.e., to evaluate a cutting property.

The test specimen as Example 1 was produced under a conventional cooling condition. It had a Rockwell hardness of not lower than 24 and satisfied Eq.(E), and further had a measured ovalness degree not exceeding a standard value of 1mm.

The test specimen as Example 2 was produced to be intended to increase in hardness in such a manner that the quantity of cooling air was increased with respect to that in Example 1. This example satisfied Eq.(E) and exhibited an excellent fracture separation ability.

The test specimens as Examples 3 to 6 were respectively produced under the conventional cooling condition. Any of them had a Rockwell hardness of not lower than 24 and satisfied Eq.(E), and therefore had a measured ovalness degree not exceeding the standard value.

The test specimen as Example 7 was high in hardness because of a large amount of carbon contained, though relatively low in amount of phosphorus contained, so as to exhibit an excellent fracture separation ability. In this case, the test specimen had a value E of not higher than 150.

In contrast, the test specimens as Comparative Examples I and II formed of the same type of steel as Examples 1 and 3 (steel of types A and B) were produced upon being cooled after forging at a rate lower than that in the conventional cooling condition. This decreased the hardness and increased the ovalness degree.

A material containing a large amount of phosphorus, such as the test specimen as Comparative Example III, was so brittle as to exhibit an excellent fracture separation ability and obtained an ovalness degree not exceeding the standard value. However, such a material could not be expected to ensure a sufficient hardness and was likely to cause cracks when a steel material was molten, and therefore degraded in ability to be produced as a machine part.

The test specimen as Comparative Example IV contained a large amount of carbon and was high in hardness so as to obtain an ovalness degree not exceeding the standard value even though low in amount of phosphorus. However, the test specimen as Comparative Example IV was degraded in cutting property.

The test specimen as Comparative Example V had a high Rockwell hardness not lower than 24; however, it was degraded in fracture separation ability because of a low amount of phosphorus contained.

Fig. 2 is a scatter diagram of experimental data showing the correlation between a value E and a value of a measured ovalness degree, based on Examples and Comparative Examples. With the value E, prediction can be made whether the test specimen has a measured ovalness degree below the standard value.

The connecting rod having a measured ovalness degree below the standard value satisfies Eq.(E). Some connecting rods do not satisfy Eq.(E) even though they have a measured ovalness degree below the standard value; however, they are out of the scope of the present invention from the viewpoint of hardness, the cutting property, and the ability to be produced as a machine part.

Fig. 3 is a scatter diagram of experimental data showing the correlation between a Rockwell hardness and a measured ovalness degree, based on Examples and Comparative Examples.

The connecting rod having a Rockwell hardness of not lower than 24 exhibits an excellent fracture separation ability. The connecting rod having a phosphorus amount less than the prescribed amount is degraded in fracture separation ability, even though it has a Rockwell hardness of not lower than 24. Further, the connecting rod containing an excessively large amount of phosphorus exhibits an excellent fracture separation ability while it is degraded in the ability to be produced as a machine part. Furthermore, steel of types A to F used in Examples are particularly excellent in easy cutting property, since Ca and S effective for improving the easy cutting property are added thereto.

According to the present invention, contents of C (carbon), Mn (manganese), Cr (chromium), V (vanadium) and the like are prescribed, which exerts an influence on hardness, i.e., the fracture separation ability and cutting property of the connecting rod material. Additionally, a multiple regression analysis is made in order to obtain an equation representing a relationship between steel material composition and hardness which relationship exerts a large influence on the ovalness degree (or deviation of the inside bore (in cross-section) defined by the big end from a perfect circle). On the basis of a correlation between the value E calculated from the multiple regression analysis equation and a measured ovalness degree, the composition of the steel material is so adjusted that the connecting rod has a value E with which prediction can be made whether the connecting rod has an ovalness degree below the standard value. Use of such a steel material having the adjusted composition brings about an extremely excellent effect of producing a connecting rod excellent in fracture separation ability and cutting property.

Although the invention has been described above by reference to certain embodiments and examples of the invention, the invention is not limited to the embodiments and examples described above. Modifications and variations of the embodiments and examples described above will occur to those skilled in the art, in light of the above teachings.

The entire contents of Japanese Patent Application P2005-311365 (filed October 26, 2005) are incorporated herein by reference. The scope of the invention is defined with reference to the following claims.

**Claims**

1.  A non-heat treated steel for hot forging and for a connecting rod, comprising, in mass percent:

    0.3 to 0.8% of C;
    0.1 to 2.0% of Si;
    0.5 to 1.5% of Mn;
    0.01 to 0-15% of P;
    1.0% or less of Cr;
    0.4% or less of V;
    0.05% or less of Al;
    0.005 to 0.03% of N; and

    the balance Fe and inevitable impurities,
    wherein the non-heat treated steel has a value E of not larger than 150, the value E being calculated from the following equation:

    $$E = 2804 - 1549 \times Ceq - 8862 \times P - 23.4 \times H$$

    where H is a value of a Rockwell hardness (C-scale) of the connecting rod made of the non-heat treated steel; P is a phosphorus content (%) in the connecting rod; and Ceq is a value of a carbon equivalent, the value Ceq being calculated from the following equation:

    $$Ceq = C(\%) + 0.166Si(\%) + 0.22Mn(\%) + 0.25Cr(\%) + 1.8V(\%).$$

2.  A non-heat treated steel as claimed in Claim 1, further comprising at least one selected from the group consisting of 0.03 to 0.15% of S, 0.3% or less of Pb and 0.01% or less of Ca.

3.  A connecting rod comprising, in mass percent:

    0.3 to 0.8% of C;
    0.1 to 2.0% of Si;
    0.5 to 1.5% of Mn;
    0.01 to 0.15% of P;
    1.0% or less of Cr;
    0.4% or less of V;
    0.05% or less of Al;
    0.005 to 0.03% of N; and

    the balance Fe and inevitable impurities,
    wherein the connecting rod has a value E of not larger than 150, the value E being calculated from the following equation:

    $$E = 2804 - 1549 \times Ceq - 8862 \times P - 23.4 \times H$$

    where H is a value of a Rockwell hardness (C-scale) of the connecting rod; P is a phosphorus content (%) in the connecting rod; and Ceq is a value of a carbon equivalent, the value Ceq being calculated from the following equation :

$$\mathrm{Ceq} = \mathrm{C}(\%) + 0.166\mathrm{Si}(\%) + 0.22\mathrm{Mn}(\%) + 0.25\mathrm{Cr}(\%) + 1.8\mathrm{V}(\%).$$

4. A connecting rod as claimed in Claim 3, further comprising at least one selected from the group consisting of 0.03 to 0.15% of S, 0.3% or less of Pb and 0.01% or less of Ca.

5. A connecting rod as claimed in Claim 3 or 4, wherein the connecting rod has a Rockwell hardness (C-scale) of from 24 to 35.

# FIG.1

# FIG.2

# FIG.3

## EUROPEAN SEARCH REPORT

**European Patent Office**

| | Application Number |
|---|---|
| | EP 06 02 2072 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 243 665 A (DAIDO STEEL COMPANY LTD [JP]; NISSAN MOTOR [JP]) 25 September 2002 (2002-09-25) * claims 1-5 * * paragraph [0001] - paragraph [0029] * * table 1 * * paragraph [0037] - paragraph [0040] * | 1-5 | INV. C22C38/02 C22C38/04 C22C38/60 C22C38/24 F16C7/00 |
| X | JP 2005 054228 A (AICHI STEEL WORKS LTD; TOYOTA MOTOR CORP; NIPPON STEEL CORP) 3 March 2005 (2005-03-03) * the whole document * | 1-5 | |
| X | JP 2003 193184 A (KOBE STEEL LTD) 9 July 2003 (2003-07-09) * the whole document * | 1-5 | |
| X | WO 2004/083475 A (SUMITOMO METAL IND [JP]; HONDA MOTOR CO LTD [JP]; HASEGAWA TATSUYA [JP] 30 September 2004 (2004-09-30) * claims 1,2 * * tables 1-3 * | 1-5 | TECHNICAL FIELDS SEARCHED (IPC) C22C F16C |
| X | US 5 985 044 A (KURITA MASATO [JP] ET AL) 16 November 1999 (1999-11-16) * claims 1-20 * * table 2 * | 1-5 | |
| X | EP 1 069 198 A1 (SUMITOMO METAL IND [JP]) 17 January 2001 (2001-01-17) * claims 1-6 * * tables 1,3-5,7-9,11-13,15,16 * | 1-5 | |
| X | JP 2000 073141 A (KOBE STEEL LTD) 7 March 2000 (2000-03-07) * the whole document * | 1-5 | |
| | -/-- | | |

The present search report has been drawn up for all claims

| Place of search | Date of completion of the search | Examiner |
|---|---|---|
| The Hague | 27 February 2007 | Vlassi, Eleni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**European Patent**
**Office**

**EUROPEAN SEARCH REPORT**

Application Number

EP 06 02 2072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 01 176055 A (KAWASAKI STEEL CO) 12 July 1989 (1989-07-12) * the whole document * | 1-5 | |
| X | GB 2 331 306 A (ISUZU MOTORS LTD [JP]; NIPPON STEEL CORP [JP]) 19 May 1999 (1999-05-19) * table 1 * * page 1, paragraph 1 - page 6, paragraph 2 * | 1-5 | |
| X | JP 11 199924 A (TOA STEEL CO LTD) 27 July 1999 (1999-07-27) * the whole document * | 1-5 | |
| X | JP 2001 262267 A (SUMITOMO METAL IND) 26 September 2001 (2001-09-26) * the whole document * | 1-5 | |
| A | JP 09 268345 A (DAIDO STEEL CO LTD) 14 October 1997 (1997-10-14) * the whole document * | 1-5 | TECHNICAL FIELDS SEARCHED (IPC) |
| A | EP 0 856 590 A2 (DAIDO STEEL CO LTD [JP]) 5 August 1998 (1998-08-05) * claims 1-3 * * tables 1,2,4,5 * | 1-5 | |
| A | JP 08 291373 A (DAIDO STEEL CO LTD) 5 November 1996 (1996-11-05) * the whole document * | 1-5 | |

The present search report has been drawn up for all claims

| Place of search | Date of completion of the search | Examiner |
|---|---|---|
| The Hague | 27 February 2007 | Vlassi, Eleni |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 06 02 2072

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2007

| Patent document cited in search report | | Publication date | Patent family member(s) | | Publication date |
|---|---|---|---|---|---|
| EP 1243665 | A | 25-09-2002 | JP | 2002275578 A | 25-09-2002 |
| | | | US | 2003098095 A1 | 29-05-2003 |
| JP 2005054228 | A | 03-03-2005 | NONE | | |
| JP 2003193184 | A | 09-07-2003 | NONE | | |
| WO 2004083475 | A | 30-09-2004 | CN | 1761769 A | 19-04-2006 |
| | | | EP | 1605071 A1 | 14-12-2005 |
| | | | TW | 255859 B | 01-06-2006 |
| | | | US | 2006000088 A1 | 05-01-2006 |
| US 5985044 | A | 16-11-1999 | JP | 2991064 B2 | 20-12-1999 |
| | | | JP | 8170146 A | 02-07-1996 |
| EP 1069198 | A1 | 17-01-2001 | CA | 2323952 A1 | 03-08-2000 |
| | | | CN | 1293716 A | 02-05-2001 |
| | | | WO | 0044953 A1 | 03-08-2000 |
| | | | US | 6475305 B1 | 05-11-2002 |
| JP 2000073141 | A | 07-03-2000 | JP | 3671688 B2 | 13-07-2005 |
| JP 1176055 | A | 12-07-1989 | NONE | | |
| GB 2331306 | A | 19-05-1999 | DE | 19853259 A1 | 20-05-1999 |
| | | | JP | 3445478 B2 | 08-09-2003 |
| | | | JP | 11152546 A | 08-06-1999 |
| | | | US | 5993571 A | 30-11-1999 |
| JP 11199924 | A | 27-07-1999 | JP | 3756307 B2 | 15-03-2006 |
| JP 2001262267 | A | 26-09-2001 | JP | 3536770 B2 | 14-06-2004 |
| JP 9268345 | A | 14-10-1997 | JP | 3713806 B2 | 09-11-2005 |
| EP 0856590 | A2 | 05-08-1998 | DE | 69813920 D1 | 05-06-2003 |
| | | | DE | 69813920 T2 | 26-02-2004 |
| JP 8291373 | A | 05-11-1996 | JP | 3637375 B2 | 13-04-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002275578 A

- JP P2005311365 B